# EUROPEAN PATENT APPLICATION

(11) **EP 4 733 107 A1**
(43) Date of publication of application: **29.04.2026**
(21) Application number: 25210858.4
(22) Date of filing: 23.10.2025
(51) Int. Cl.: B60K 7/00, B60K 6/405, F16H 57/029, F16H 57/04, H02K 9/19, B60K 17/04, F16H 57/02

(54) **IMPROVED ELECTRIC DRIVE WHEEL HUB**

(30) Priority: 25.10.2024 IT 202400023916
(71) Applicant: IVECO S.P.A., 10156 Torino (IT)
(72) Inventor: PEREIRA DE LEMOS, José Francivaldo, 10156 Torino (IT); SANTORO, Francesco, 10156 Torino (IT); LIGA, Valerio, 10156 Torino (IT)
(74) Representative: Studio Torta S.p.A.

(57) **Abstract**

A wheel hub (1) for an axle (2) of a heavy vehicle, comprising a fixed portion (4) configured to be carried rigidly by one end of the axle (2) and a movable portion (3) configured to be carried rotationally freely by the end of the axle (2) and with respect to the fixed portion (4) around an axis of rotation (A), the wheel hub (1) comprising an electric machine (M) and a transfer system (G), the electric machine (M) extending beyond said fixed portion (4) along the axis (A), the transfer system (G) axially facing along the axis (A) to the electric machine (M).

## Description

### CROSS-REFERENCE TO RELATED APPLICATIONS

This patent application claims priority from Italian patent application no. 102024000023916 filed on October 25, 2024, the entire disclosure of which is incorporated herein by reference.

### TECHNICAL SECTOR

This invention relates to a wheel hub for a vehicle axle, in particular a wheel hub with integrated electric drive for a heavy vehicle axle.

### PRIOR ART

Heavy vehicles such as commercial vehicles for road transport, such as trucks, tend to be increasingly electrified to reduce their pollutant emissions. In particular, these vehicles may be hybrid vehicles or purely electric ones.

In particular, electric vehicles comprise at least one electric axle, that is, an axle provided with electric machines such as motors/generators configured to impart torque to the wheel hubs to enable them to move or to recharge battery modules of the vehicle when the latter is braking.

However, there is always a need to improve existing electric axles to reduce the footprint due to the presence of electric machines that affect the vehicle's usable space as well as forcing modifications to the suspension systems.

There is a similar need for rims that can be optimally mounted on electric axles without compromising their structural characteristics.

For this purpose, it is known to provide drive wheels, that is wheel hubs with integrated electric drive.

However, these drive wheels are particularly bulky and difficult to assemble. Again, they are particularly limited, that is, they can only be used to provide a limited torque range.

There is, therefore, a need to make such drive wheels more compact, economical and versatile in use.

The purpose of this invention is to meet the needs mentioned above in an optimal and inexpensive way.

### SUMMARY OF THE INVENTION

The above-mentioned purpose is achieved with a wheel hub with integrated electric drive and a vehicle as claimed in the attached claims.

### BRIEF DESCRIPTION OF THE DRAWINGS

For a better understanding of this invention, a preferred embodiment is described below by way of nonlimiting example and with reference to the accompanying drawings, wherein:
- Figure 1 is a schematic view in longitudinal cross section of a wheel hub with integrated electric drive according to a first embodiment of the invention;
- Figure 2 is a schematic view in longitudinal cross section of the wheel hub in Figure 1 illustrating the lines of torque transmitted during its operation;
- Figures 3A-3B are schematic views in longitudinal cross section of a wheel hub with integrated electric drive according to a second embodiment of the invention; and
- Figure 4 is a schematic view in longitudinal cross section of the wheel hub in Figure 3B illustrating the lines of torque transmitted during its operation.

### DETAILED DESCRIPTION OF THE INVENTION

The attached figures illustrate two embodiments of a wheel hub 1 with integrated electric drive used on an axle 2 for a vehicle (not illustrated) such as a commercial vehicle, for example a truck. The axle 2 extends along a longitudinal axis A.

The wheel hub 1 comprises a fixed portion 4 rigidly supported by an end portion of the axle 2 and a movable portion 3 carried rotationally freely by this fixed portion 4 and configured to be connected to a wheel W of the vehicle.

Specifically, the fixed portion 4 comprises a connecting portion 4' configured to be connected to the axle 2, an end portion 4" opposite the connecting portion 4 and an intermediate portion 4‴ axially interposed along the axis A between the connecting portion 4' and the end portion 4''.

The movable portion 3 essentially comprises an end cup-shaped portion 3' wrapping around at least the end portion 4'' and a flanged portion 3'' housed around the intermediate portion 4‴ and supported rotationally freely relative to it by means of support means 5 such as rolling means, for example ball or roller bearings.

More specifically, the flanged portion 3'' comprises a cylindrical portion 3a supported by the above-mentioned support means 5 with respect to the intermediate portion 4‴, a first flange 3b extending radially with respect to the longitudinal axis A from the cylindrical portion 3a and advantageously made of a single piece with it.

The flanged portion 3" also comprises a second flange 3b rotationally coupled to the cylindrical portion 3a, spaced longitudinally with respect to the first flange 3b and advantageously made as a separate element from it.

The cup-shaped portion 3' essentially comprises a cylindrical portion 3d of the axis A that surrounds the end portion 4'' of the fixed portion 2 and is connected to the flanged portion 3'', for example the flange 3b, and a cover 3e facing the end portion 4'' along the axis A.

Specifically, the cup-shaped portion 3' defines a space 6 radially included, with respect to the axis A, by the cylindrical portion 3d and axially delimited by the cover 3e and the flanged portion 3'' and the fixed portion 4 on the opposite side with respect to the axis A.

The space 6 is configured to house at least one electric machine M. In the embodiment illustrated, this comprises a single electric machine M with a stator M' and a rotor M" configured to interact electromagnetically as known.

Specifically, the stator M' is radially placed internally with respect to the rotor M" and both are coaxial to the axis A. In addition, the electric machine M is placed outside the wheel W, in particular axially outside the wheel disc along the longitudinal axis A.

In particular, the stator M' is supported by the fixed portion 4, in particular by the end portion 4'' axially beyond it, for example by means of a bracket as illustrated, while the rotor M" is carried by a rotor holder 7 supported so it is rotationally free by the fixed portion, in particular by the end portion 4".

Consequently, the electric machine M is housed in the electric space 6 axially facing the fixed portion 4, in other words axially interposed between it and the cover 3e.

If there were two electric machines, both would rest on the rotor holder 7.

As further described below, the electric machine M is electrically powered and conditioned.

The rotor holder 7 is connected via a transfer system G to the movable portion 3. In the embodiment illustrated, the transfer system G is supported by the end portion 4" and is consequently axially interposed between the axle 2 and the electric machine M.

Advantageously, the movable portion 3 comprises an inner radial flange 3f extending radially from the cylindrical portion 3d towards the axis A and dividing the space 6 into a first portion 6' facing the cover 6e and housing the electric machine M and a second portion 6'' facing the flanged portion 6'' and housing the transfer system G.

Advantageously, between the rotor holder 7' and a stator holder 7'', the wheel hub 1 comprises sealing means 8 configured to prevent transmission of lubricant or dirt between the second portion 6'' to the first portion 6' of the space 6.

These sealing means 8 preferably comprise gaskets such as O-rings.

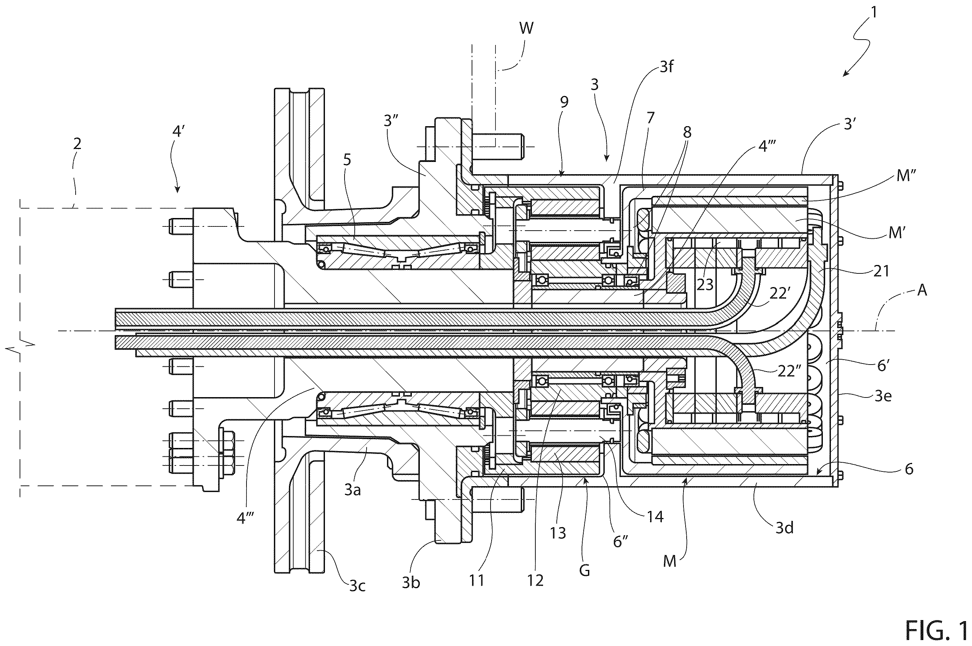

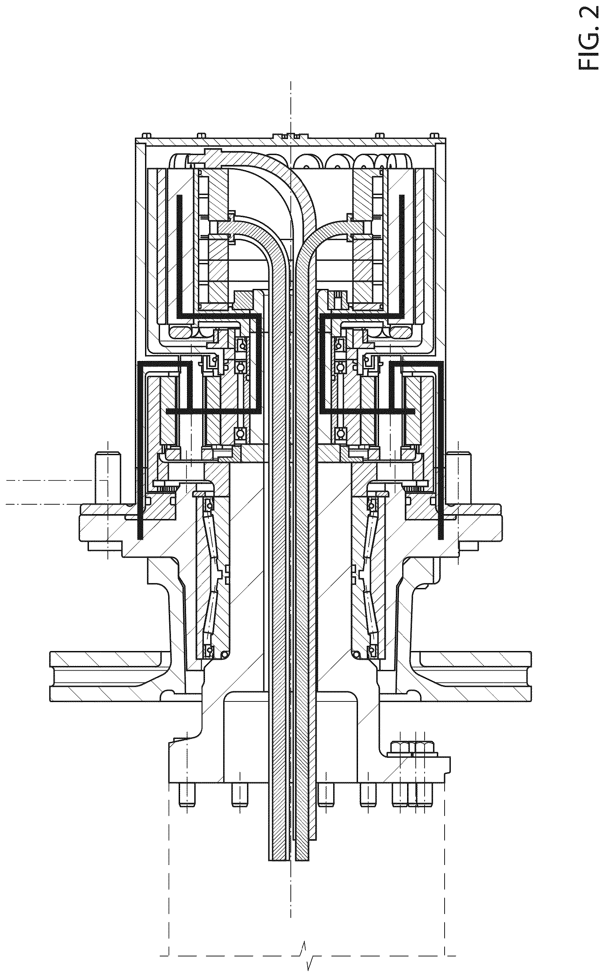

In the embodiment in Figures 1 and 2, the transfer system G comprises an epicyclic gear 9, particularly a standard one.

In particular, the epicyclic gear 9 comprises a crown 11, a sun gear 12 and multiple satellites 13 meshing between the crown 11 and the sun gear 12.

In particular, the crown 11 is rigidly supported by the fixed portion 4, at the internal end 4'' while the sun gear 12 is supported around it rotationally freely and dragged by the rotor holder 7.

The satellites 13 are supported rotationally freely around pins 14 that are rigidly supported by the movable portion 3, in particular by the inner radial flange 3f.

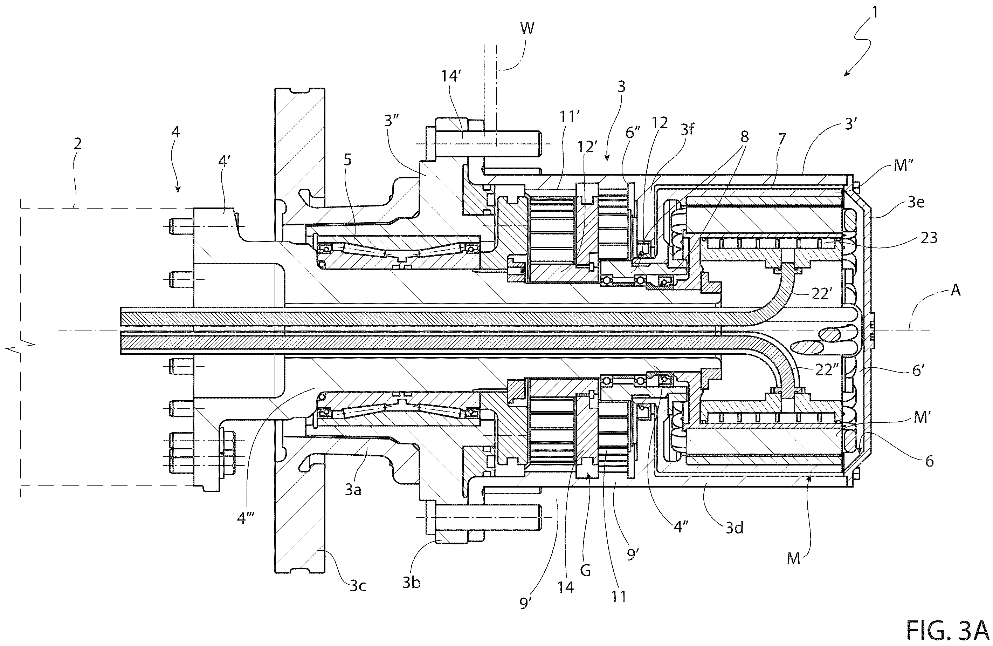

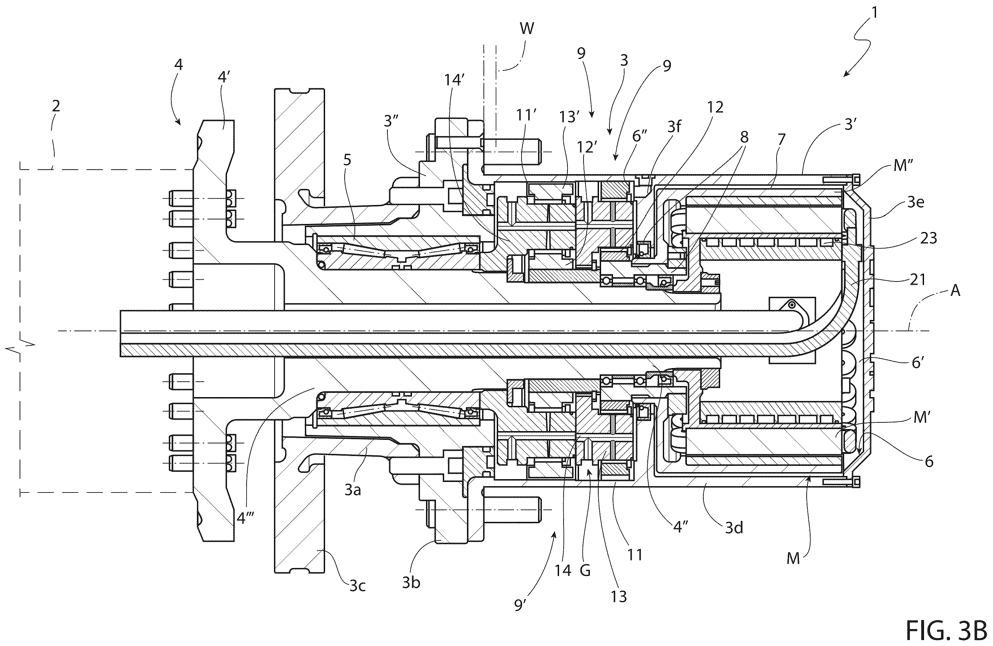

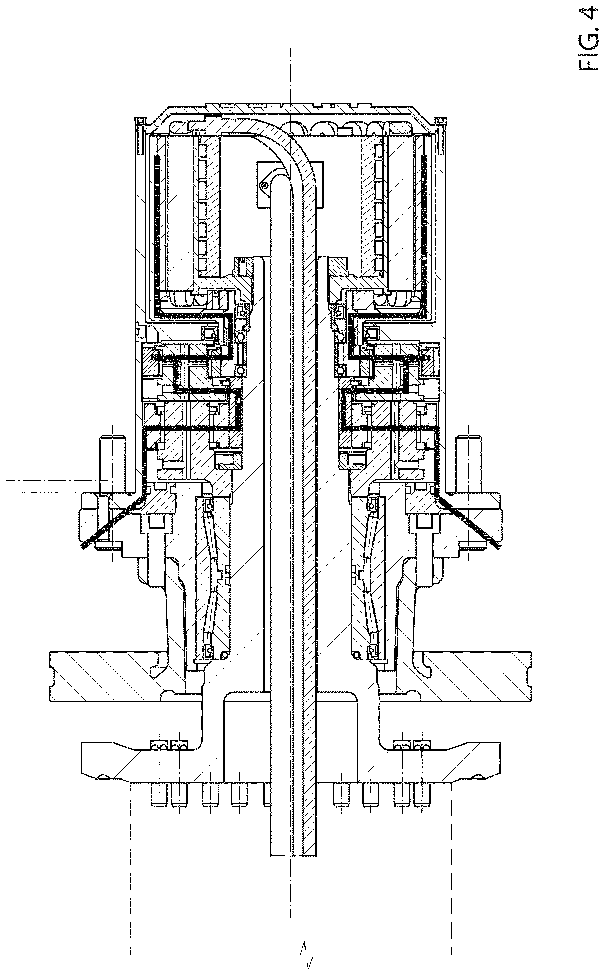

In the embodiment in Figures 3A, 3B and 4, the transfer system G comprises a first and a second gear 9', 9'' one in series operationally with the other between the electric machine M and the rotating portion 3.

Specifically, at least these first and second gears 9', 9'' are epicyclic.

In particular, the first epicyclic gear 9 comprises a crown 11, a sun gear 12 and multiple satellites 13 meshing between the crown 11 and the sun gear 12.

In particular, the crown 11 is rigidly supported by the rotating portion 3, while the sun gear 12 is supported around the fixed portion 4 rotationally freely and dragged by the rotor holder 7.

The satellites 13 are supported rotationally freely around pins 14 that are supported rotationally free within the space 6.

Specifically, the second epicyclic gear 9' comprises a crown 11', a sun gear 12' and multiple satellites 13' meshing between the crown 11' and the sun gear 12'.

In particular, the crown 11' is rigidly supported by the rotating portion 3, while the sun gear 12' is supported around the fixed portion 4 rotationally freely and dragged by the satellite holder 14 of the first gear 9.

The satellites 13' are supported rotationally freely around pins 14 that are supported integral with the fixed portion 4.

As can be seen, in both embodiments, the satellite holders 14, 14' are equipped with ducts to allow the passage of lubricating fluid into the portion 6'' of the space 6.

Specifically, the satellite holders 14, 14' axially face each other so as to slide freely without contact, advantageously at the shortest possible distance, at least one pair of the ducts defined by these satellite holders 14, 14' are coaxial so as to allow the passage of lubricant along the direction of the axis A between the two banks of the gears 9, 9'.

In both of the above embodiments, the wheel hub 10 also comprises cables 21 for electrically connecting the electric machine M with electricity storage means (not illustrated) such as a battery, of the vehicle.

The cables 21 are advantageously housed within the space defined by the axle 2 and exit it near the inner end 4'' and pass through a dedicated, sealed opening in the space 6 to the stator M' of the electric machine M.

In both of the above embodiments, the wheel hub 10 also comprises an air conditioning system configured to cool the stator M' of the electric machine M. Advantageously, this air conditioning system is a fluid air conditioning system.

As can be seen in the attached figures, the air conditioning system comprises multiple ducts 23 through which a conditioning fluid flows. Advantageously, these ducts 23 are integrated within the portion connecting the stator M' to the fixed portion 4.

Advantageously, the ducts 23 are fluidically connected to a supply duct 22' and a return duct 22'' via respective manifolds advantageously integrated into the portion connecting the stator M' to the fixed portion 4.

The supply and return ducts 22', 22'' are fluidically connected to a heat exchange system (not shown) of the vehicle such as a passive heat exchanger such as an air radiator or an active device such as a refrigeration-type air conditioning circuit.

Advantageously, the supply ducts 22', 22'' are housed inside parallel to the electrical cables 21 thus parallel to the longitudinal axis A and inside the space of the fixed portion 4 of the space 6.

The operation of the embodiment of the wheel hub, axle and vehicle according to the invention described above is the following, referring to the torque lines in Figures 2 and 4.

In the first embodiment, illustrated in Figure 2, torque is provided by the rotor M" that is rotated by the interaction with the stator M' that absorbs electricity from the storage means. This rotation is imparted to the rotor holder 7, which drags the sun gear 12, which engages with the satellites 13 that rotate between it and the crown 11. This revolution drags the pins 14 that, supported integrally with the movable portion 3, rotate the latter. If it functions as a generator, the operation is reversed so that torque flows from the movable portion 3 to the rotor M'', which interacts with the stator M' and generates electricity that is stored in the above-mentioned storage means.

In the second embodiment, illustrated in Figure 4, torque is provided by the rotor M" that is rotated by the interaction with the stator M' which absorbs electricity from the storage means. This rotation is imparted to the rotor holder 7, which drags the sun gear 12, which engages with the satellites 13 that rotate between it and the crown 11. This revolution drags the pins 14 that are integral with the sun gear 12' of the second epicyclic gear 9'. The sun gear 12' engages with the satellites 13' that, rotating around the pins 14', which are fixed, rotate the crown 11' that is integral with the movable portion 3 and thus rotate this. If it functions as a generator, the operation is reversed so that torque flows from the movable portion 3 to the rotor M", which interacts with the stator M' and generates electricity that is stored in the above-mentioned storage means.

In both embodiments, the passage through the transfer system G promotes increased torque in the motor function and increases the rotation of the rotor in the generator function, thereby increasing the overall efficiency of the wheel hub operation.

In both embodiments, during operation, the air conditioning system discharges the heat generated by the operation of the electric machine M and the lubrication system lubricates the transfer system G.

The advantages of a wheel hub, axle, and vehicle according to the invention are clear from the foregoing.

Thanks to the proposed structure, it is possible to provide an axle with integrated electric drive via the hub with integrated electric drive that takes up little space and weighs little.

In particular, the housing of the electric machine in the wheel hub and outside the wheel itself, and of the epicyclic transmission within the space defined by the wheel hub, makes it possible to obtain a very compact, lightweight drive system that is isolated from the external environment and therefore protected from wear and dirt.

In addition, the use of an epicyclic gearing makes it possible to achieve a high transmission ratio with an extremely small footprint, both axially and radially. This advantage is even more pronounced in the case of a compound epicyclic gearing.

The housing of the electric machine outside the transfer system G allows for easier replacement of the machine.

Furthermore, the integration of the cooling, lubrication and power supply systems within the wheel hub allows for easy and optimised assembly, reducing axle manufacturing times.

Furthermore, the proposed axle and wheel hub are modular and scalable for different vehicle types and sizes.

Lastly, it is clear that modifications and variations may be made to the wheel hub, axle, and vehicle according to this invention, without, however, departing from the scope of protection defined by the claims.

Obviously, as mentioned, the axle and wheel hub can have different shapes and be made of several different parts.

Again, the gear wheels and gears described could vary and elements not described but known to exist could be included for the assembly of a hub, axle, and vehicle according to this invention.

In addition, although a twin-wheel solution is described, the wheel hub can be applied to any type of wheel, even a single one.

## Claims

1. A wheel hub (1) for an axle (2) of a heavy vehicle, said wheel hub (1) comprising a fixed portion (4) configured to be carried rigidly by one end of said axle (2) and a movable portion (3) configured to be carried rotationally freely by said end of said axle (2) and with respect to said fixed portion (4) around an axis of rotation (A),
said fixed portion (4) and said movable portion (3) delimiting with said fixed portion (4) a space (6) isolated from the external environment, said wheel hub (1) comprising an electric machine (M) housed in said space (6) and comprising a stator (M') carried integral with said fixed portion (4) and a rotor (M'') operatively connected to said movable portion (3),
said wheel hub (1) comprising a transfer system (G) housed in said space (6), said transfer system (G) connecting said rotor (M") to said movable portion (6) so as to vary the speed/torque between said rotor (M") and said movable portion (9),
said electric machine (M) extending beyond said fixed portion (4) along said axis (A) on the opposite side of said axle, said transfer system (G) being axially facing along said axis (A) to said electric machine (M).

2. The wheel hub according to claim 1, wherein said transfer system (G) is axially interposed between said electric machine (M) and said fixed portion (4).

3. The wheel hub according to one of the preceding claims, wherein said gearing is an epicyclic gearing (9).

4. The wheel hub according to one of the preceding claims, wherein said gearing is a compound/multistage epicyclic gearing (9, 9').

5. The wheel hub according to one of the preceding claims, wherein said space (6) is divided between a first portion (6') and a second portion (6'') separated from each other, said first portion (6') being axially internal with respect to said second portion (6''), said first portion (6') housing said transfer system (G) and said second portion (6'') housing said electric machine (M).

6. The wheel hub according to claim 3, wherein said epicyclic gearing (9) comprises a crown (11), a sun gear (12) and a plurality of satellites (13), wherein said crown (11) is carried integral with said fixed portion (4), said sun gear (12) is driven by said rotor (M") and carried rotationally free from said fixed portion (4), said satellites (13) meshing between said crown (11) and said sun gear (12) and being supported rotationally free by pins (14), said pins (14) being carried by said movable portion (3).

7. The wheel hub according to claim 5 and 6, wherein said space (6) is divided into two portions (6', 6") by a flange (3f), said pins (14) being carried by said flange (3f).

8. The wheel hub according to one of the preceding claims, wherein said transfer system (G) comprises a first epicyclic gearing (9) operatively connected to said rotor (M") and a second epicyclic gearing (9') operatively connected to said mobile portion (3) and operatively connected in series to said first epicyclic gearing (9).

9. The wheel hub according to claim 8, wherein said first epicyclic gearing (9) comprises a first crown (11), a first sun gear (12) and a first plurality of satellites (13), said second epicyclic gearing (9') comprises a second crown (11'), a second sun gear (12') and a second plurality of satellites (14'),
said first crown (11) being integral with said mobile portion (3), said first sun gear (12) being rotationally free from said fixed portion (4), said first plurality of satellites (13) meshing between said first sun gear (12) and said first crown (11), said satellites (13) being carried by respective first pins (14),
said second crown (11') being integral with said mobile portion (3), said second sun gear (12') being rotationally free from said fixed portion (4) and driven by said first pins (14), said second plurality of satellites (13') meshing between said second sun gear (12') and said second crown (11), said satellites (13') being carried by respective second pins (14') carried by said fixed portion (4).

10. The wheel hub according to one of the previous claims, comprising an air conditioning system (40) for said electric machine (15).

11. The wheel hub according to claim 10, wherein said air conditioning system is a fluid air conditioning system and comprises a plurality of ducts (23) adjacent to said electric machine (M) configured to allow the flow of an air conditioning fluid towards a heat exchange system of said vehicle.

12. The wheel hub according to one of the preceding claims, wherein said fixed portion (4) defines an opening configured to allow the sealed connection of the electric machine (M) to an electric power source of said vehicle via electric cables (21).

13. The wheel hub according to one of the preceding claims, comprising a lubrication system for said transfer system.

14. The wheel hub according to claim 13, when dependent on claim 8, wherein said first and second satellites (13, 13') are axially facing each other and define channels communicating with each other to allow the passage of lubricant supplied by said lubrication system.

15. An Axle (2) extending along an axis (A) and respective wheel hubs (1) according to one of the preceding claims each carried by a respective end portion (3, 4).

16. A vehicle comprising an axle (2) according to claim 15.
